# EUROPEAN PATENT SPECIFICATION

(11) **EP 4 481 231 B1**
(45) Date of publication and mention of the grant of the patent: **18.11.2026**
(21) Application number: 24180392.3
(22) Date of filing: 06.06.2024
(51) Int. Cl.: F16H 1/06, F16H 57/04, B60K 17/16, B60K 1/02, B60K 7/00, F16H 57/021

(54) **DRIVE MODULE ASSEMBLY AND DRIVE MODULE SYSTEM INCLUDING THE SAME**
ANTRIEBSMODULANORDNUNG UND ANTRIEBSMODULSYSTEM DAMIT
ENSEMBLE MODULE D'ENTRAÎNEMENT ET SYSTÈME DE MODULE D'ENTRAÎNEMENT LE COMPRENANT

(30) Priority: 14.06.2023 US 202318209607
(43) Date of publication of application: 25.12.2024
(73) Proprietor: BorgWarner Inc., Auburn Hills, MI 48326 (US)
(72) Inventor: FRANCIS, Philip J., Lapeer, MI 48446 (US); BEYERLEIN, Gregory L., Clarkston, MI 48346 (US); CHAVAN, Aniruddha, Sterling Heights, MI 48310 (US); BIEDERWOLF, Matthew A., Fishers, IN 46037 (US); NICKOLOFF, Brian, Grand Blanc, MI 48439 (US); BEDI, Gurmeet Singh, Rochester Hills, MI 48307 (US); SHAW, Wesley L., Troy, MI 48085 (US)
(74) Representative: Peterreins Schley

(56) References cited:
- EP-A1- 4 166 819
- WO-A1-2022/135082
- DE-A1- 102007 011 029
- JP-A- H06 288 465
- US-A- 5 505 112
- US-A1- 2016 186 855
- US-B2- 10 746 282
- US-B2- 11 619 296

## Description

### BACKGROUND OF THE DISCLOSURE

### 1. Field of the Disclosure

This invention relates generally to drive module assembly, and in particular to a drive module assembly for use in a drive module system.

### 2. Description of the Related Art

Typical drive module assemblies include a housing defining a housing interior for containing a lubricant, an input shaft extending coupled to the housing and configured to receive rotational torque from a power source, a gear train disposed in the housing interior and rotatably coupled to the input shaft, and an output shaft rotatably coupled to the gear train and configured to provide rotational torque to wheels of a vehicle.

Lubricant in the drive module assembly is used to lubricate and cool various components, such as the gear train, during use of the drive module assembly. In some applications, such as in vehicles, the drive module assembly may encounter various events that cause the lubricant in the housing interior to move and slosh within the housing interior. For example, the lubricant may quickly move to one side of the housing interior, which may cause some portions of the housing interior to become dryer than desired. In high performance vehicles using typical drive module assemblies, the movement of lubricant to one side of the housing interior is particularly relevant during intense driving maneuvers. When the lubricant sloshes around and quickly moves to one side of the housing interior, a sump containing lubricant becomes drier than desired. In such instances, when there is a reduced volume of lubricant in the sump, a pump is unable to pull lubricant to pump the lubricant to where the lubricant is needed to cool and lubricate various components of the drive module assembly. Additionally, when the lubricant sloshes and moves around in the housing interior, the lubricant may interact with various components of the drive module assembly, such as an electric motor, which causes shear of the lubricant and generates heat and/or the lubricant may migrate to a corner of the drive module assembly where the lubricant is not able to be used. This may result in overheating of the electric motor, even more particularly if the electric motor is lubricant cooled, which results in temporary or permanent degrading of performance of the electric motor.

US 10 746 282 B2 discloses a vehicle drive device that includes a differential gear mechanism disposed in a power transmission mechanism transmitting a drive power from a drive power source to multiple wheels and that drives an oil pump in conjunction with rotation of the differential gear mechanism, and particularly relates to a technique of suitably preventing a seizure of the oil pump during backward running of a vehicle.

US 2016/186855 A1 discloses a lubricating structure for a vehicle drive system scooping up lubricating oil, which is stored at a bottom in a case of the vehicle drive system and supplied to a lubricated portion, with the reduction gear and storing part of the lubricating oil in a catch tank.

US 5 505 112 A discloses gear device such as a change gear transmission of the countershaft type in which, mounted for rotation about the countershaft is a larger gear and a smaller gear. The transmission housing defines a first lubricant reservoir, having a nominal fill level, which is able to lubricate the smaller gear as it rotates. A partition member is disposed around the larger gear and defines a second lubricant reservoir through which the larger gear passes as it rotates. The partition member defines fluid passages providing restricted communication from the first reservoir to the second reservoir. The fluid passages are sized such that as the larger gear rotates, carrying lubricant out of the second reservoir, there is maintained in the second reservoir a second fill level, below the first fill level such that at least a portion of the teeth of the larger gear pass just below the second fill level as the larger gear rotates. The result is substantially reduced churning losses, without decreasing the ability to lubricate the smaller gears

To this end, there remains a need for an improved drive module assembly.

### SUMMARY OF THE INVENTION

A drive module assembly includes a housing defining a housing interior for containing a lubricant. The housing interior has a first interior side adjacent a first housing wall and a second interior side spaced from the first interior side and adjacent a second housing wall. The drive module assembly also includes an input shaft extending along an input axis and coupled to the housing and configured to receive rotational torque from a power source. The drive module assembly also includes a gear train disposed in the housing interior and rotatably coupled to the input shaft. The drive module assembly additionally includes an output shaft rotatably coupled to the gear train and configured to provide rotational torque. The drive module assembly further includes an oil housing disposed in the housing interior between the first housing wall and the second housing wall. The oil housing defines an oil housing interior that is configured to retain a portion of the lubricant. The oil housing has a vertical wall and an upper wall. The vertical wall extends perpendicularly with respect to the input axis partially defining said oil housing interior. The upper wall extends perpendicular to said vertical wall and further defining said oil housing interior. The upper wall defines a collection hole for collecting lubricant to retain lubricant in said oil housing interior. The upper wall is angled with respect to said input axis such that when lubricant is disposed on said upper wall the lubricant is encouraged to migrate toward and through said collection hole.

### BRIEF DESCRIPTION OF THE DRAWINGS

Other advantages of the present disclosure will be readily appreciated, as the same becomes better understood by reference to the following detailed description when considered in connection with the accompanying drawings.
FIG. 1 is a perspective view of a drive module assembly including a housing.
FIG. 2 is a cross-sectional view of the drive module assembly, with the drive module assembly including an input shaft, a gear train, and output shaft, and an oil housing.
FIG. 3 is another cross-sectional view of the drive module assembly including a retaining projection.
FIG. 4 is another cross-sectional view of the drive module assembly.
FIG. 5 is a perspective view of the oil housing.
FIG. 6 is a perspective view of the drive module assembly with a portion of the housing removed.
FIG. 7 is another cross-sectional view of the drive module assembly.
FIG. 8 is the cross-sectional view of the drive module assembly of FIG. 7 with lubricant disposed in an oil housing interior of the oil housing.

### DETAILED DESCRIPTION OF THE INVENTION

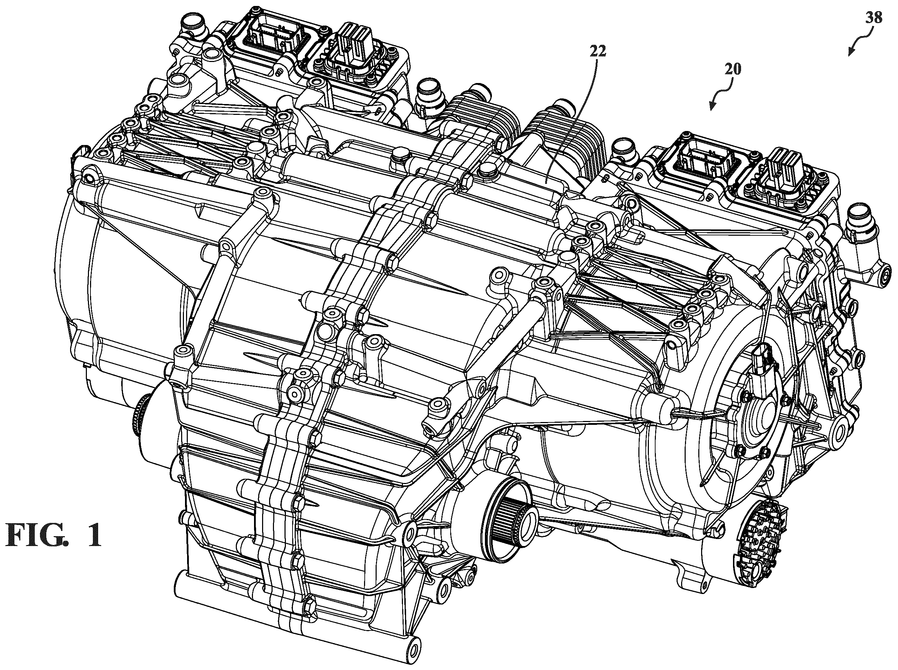

With reference to the Figures, wherein like numerals indicate like parts throughout the several views, a drive module assembly 20 is generally shown in FIG. 1. It is to be appreciated that the drive module assembly 20 may be used with an internal combustion engine, electric machines and propulsion systems, transfer cases, transmissions, or any other system requiring lubrication and lubrication control.

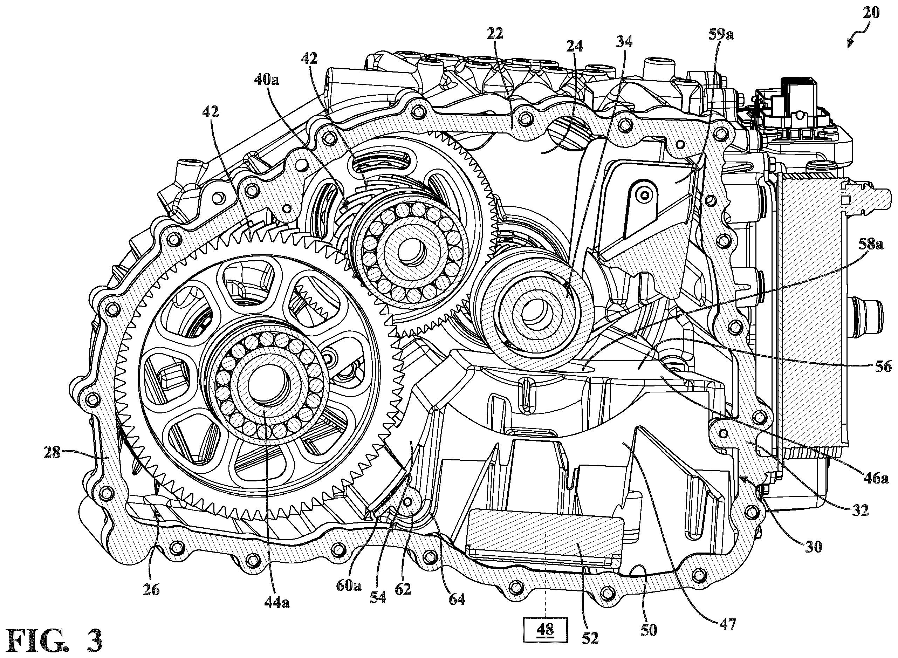

With reference to FIG. 3, the drive module assembly 20 includes a housing 22 defining a housing interior 24 for containing a lubricant. The housing interior 24 has a first interior side 26 adjacent a first housing wall 28 of the housing 22 and a second interior side 30 spaced from the first interior side 26 and adjacent a second housing wall 32 of the housing.

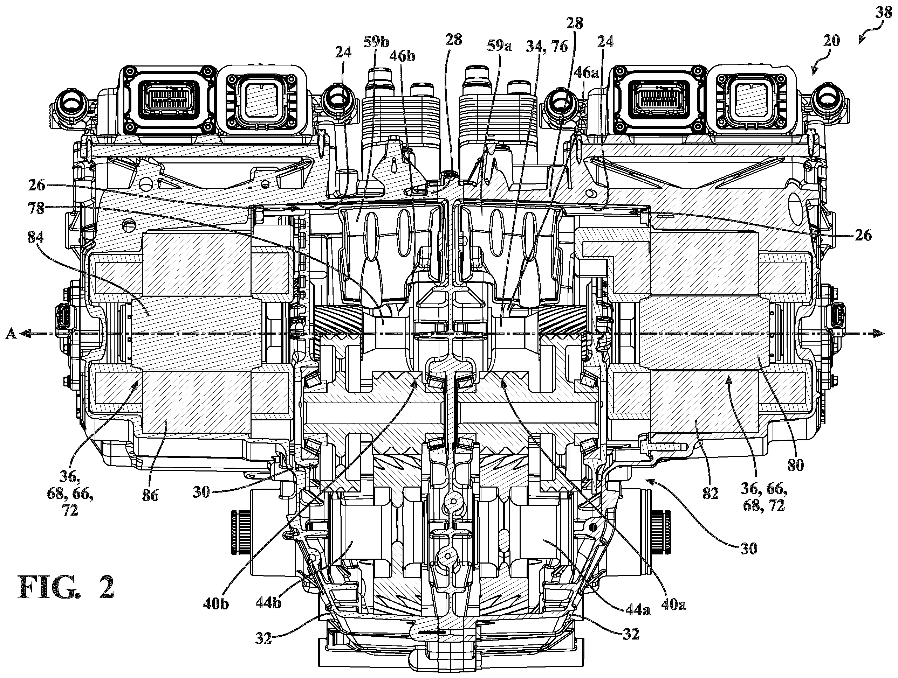

With reference to FIG. 2, the drive module assembly 20 includes an input shaft 34 extending along an input axis A and coupled to the housing 22. The input shaft 34 is configured to receive rotational torque from a power source 36, such as an internal combustion engine, an electric machine, and the like. It is to be appreciated that the power source 36 and the drive module assembly 20 collectively form a drive module system 38.

The drive module assembly 20 further includes a gear train 40a disposed in the housing interior 24. The gear train 40a is rotatably coupled to the input shaft 34. The gear train 40a may be any suitable gear train for transmitting rotational torque from the input shaft 34. The gear train 34 may include any number of gears 42, such as two gears, three gears, four gears, or five or more gears, to transmit torque. The gear train 42 may include any number of shafts and layshafts, and the gear train 42 may also be an epicyclic gear train (planetary gearset). The drive module assembly 20 may include an output shaft 44a rotatably coupled to the gear train 40a. The output shaft 44a is configured to provide rotational torque. For example, the output shaft 44a may provide rotational torque to wheels of a vehicle.

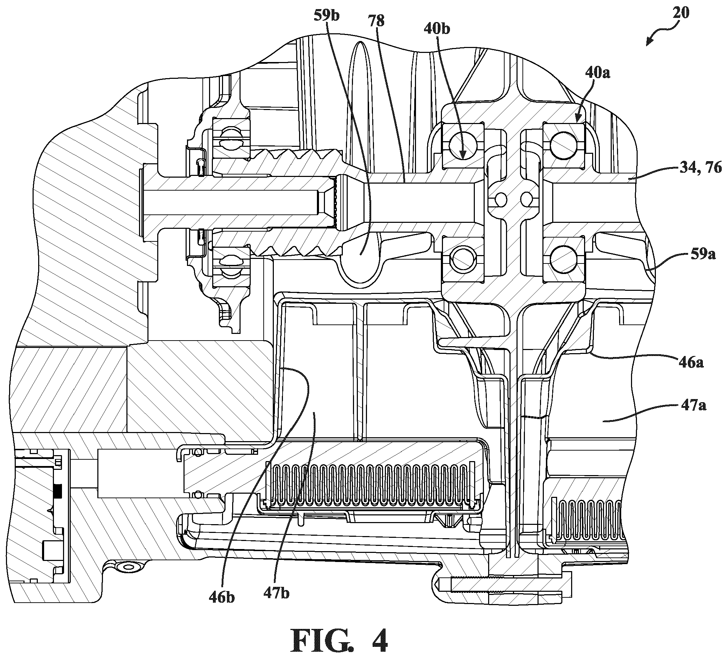

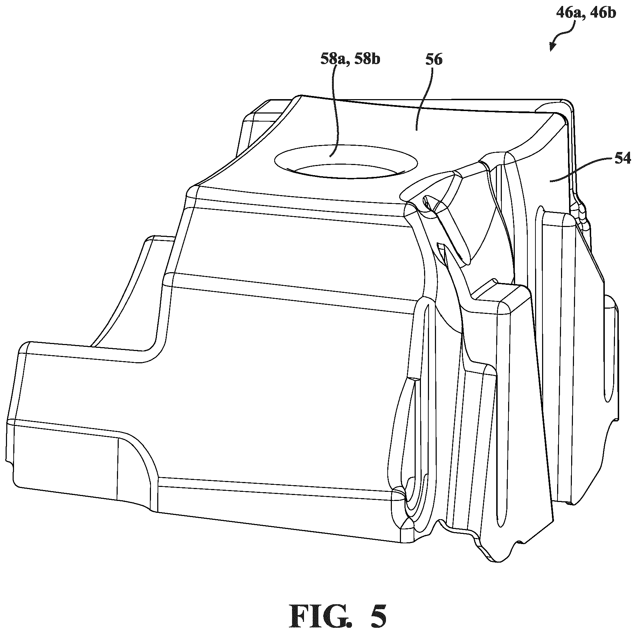

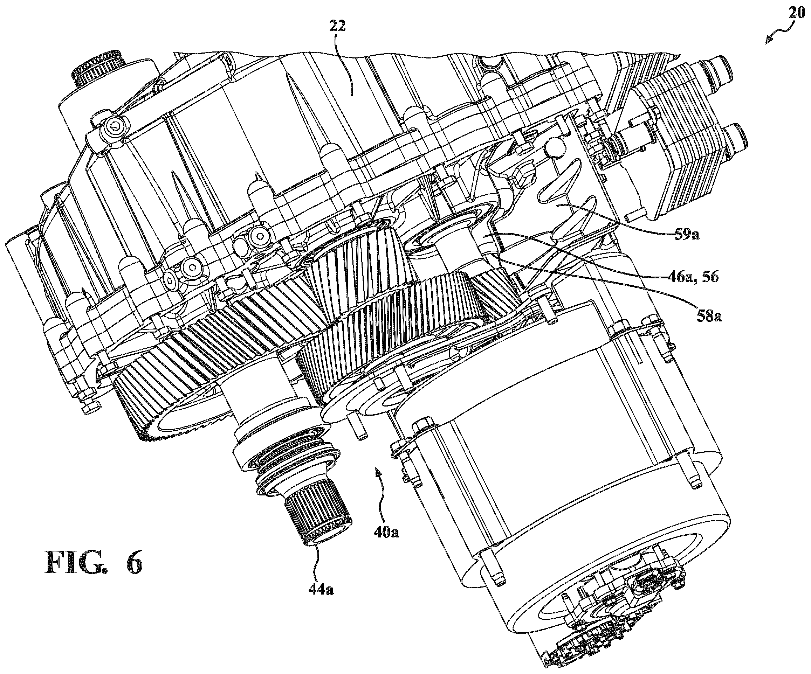

As shown in FIGS. 3-7, the drive module assembly 20 additionally includes an oil housing 46a disposed in the housing interior 24 between the first housing wall 28 and the second housing wall 32. The oil housing 46a defines an oil housing interior 47a that is configured to retain a portion of the lubricant. The oil housing 46a may be referred to as a shroud.

Having the oil housing 46a defining an oil housing interior 47a that is configured to retain a portion of the lubricant provides several advantages. The oil housing interior 47a retains lubricant to supply a continuous amount of lubricant to a pump 48 of the drive module assembly 20, with the pump 48 being configured to distribute lubricant throughout the housing interior 24 to various components, such as the gear train 40a, bearings, and the like. Specifically, during operation of the drive module assembly 20, the drive module assembly 20 may encounter various forces that cause the lubricant to move quickly to one side of the housing interior 24, such as during intense maneuvers (e.g., 1.1G turns), intense braking and acceleration, and the like, of a vehicle including the drive module assembly 20. However, with the oil housing 46a defining the oil housing interior 47a, a portion of lubricant is retained in the oil housing interior 47a, which allows the pump 48 to have a continuous amount of lubricant, which allows the pump 48 to continuously disperse the lubricant throughout the drive module assembly 20 to components that require lubrication and cooling.

In one embodiment, the oil housing interior 47a is configured to retain at least 20% of the total lubricant in the housing interior 24. In another embodiment, the oil housing interior 47a is configured to retain at least 25% of the total lubricant in the housing interior 24. In another embodiment, the oil housing interior 47a is configured to retain at least 30% of the total lubricant in the housing interior 24. In another embodiment, the oil housing interior 47a is configured to retain at least 35% of the total lubricant in the housing interior 24. In another embodiment, the oil housing interior 47a is configured to retain at least 40% of the total lubricant in the housing interior 24. In another embodiment, the oil housing interior 47a is configured to retain at least 45% of the total lubricant in the housing interior 24. In another embodiment, the oil housing interior 47a is configured to retain at least 50% of the total lubricant in the housing interior 24. In another embodiment, the oil housing interior 47a is configured to retain at least 55% of the total lubricant in the housing interior 24. In another embodiment, the oil housing interior 47a is configured to retain at least 60% of the total lubricant in the housing interior 24. In another embodiment, the oil housing interior 47a is configured to retain at least 65% of the total lubricant in the housing interior 24. In another embodiment, the oil housing interior 47a is configured to retain at least 70% of the total lubricant in the housing interior 24. In another embodiment, the oil housing interior 47a is configured to retain at least 75% of the total lubricant in the housing interior 24. In another embodiment, the oil housing interior 47a is configured to retain at least 80% of the total lubricant in the housing interior 24.

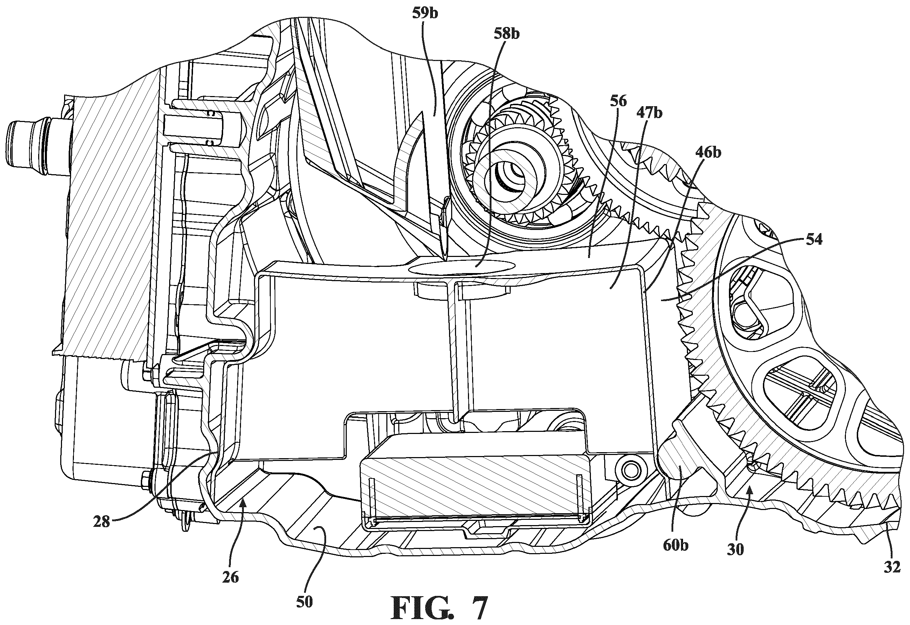

With particular reference to FIG. 7, the housing 22 typically has a bottom surface 50 extending between the first interior side 26 and said second interior side 30. The oil housing 46a is typically engaged with the bottom surface 50 and the bottom surface 50 and the oil housing 46a define the oil housing interior 47a. In one embodiment, the oil housing 46a is removably coupled to the housing 22. In other words, the oil housing 46a and the housing 22 are separate components (i.e., two pieces). In such embodiments, the oil housing 46a may be coupled to the housing 22 in any suitable manner, such as through engagement with pins of the housing 22, through fasteners, and the like. When the oil housing 46a is coupled to the housing 22 through pins of the housing 22, the pins apply a downward force to the oil housing 46a such that the oil housing 46a is engaged with the bottom surface 50 of the housing 22. The drive module assembly 20 may include seals, such as a moldable rubber bead, between the oil housing 46a, the housing 22, and/or pins of the housing 22 for further preventing flow of the lubricant between the housing 22 and the oil housing 46a.

Having the oil housing 46a engaged with the bottom surface of the housing 22 offers several advantages. First, the engagement of the oil housing 46a to the housing 22 reduces or minimizes the potential of lubricant to flow between the oil housing 46a and the bottom surface 50 of the housing 22 such that lubricant is able to flow from the oil housing interior 47a, between the oil housing 46a and the bottom surface 50 of the housing 22, and into the housing interior 24. It is to be appreciated that the engagement between the oil housing 46a and the bottom surface 50 of the housing 22 may be adjusted. For example, a tighter engagement between the oil housing 46a and the bottom surface 50 of the housing 22 reduces the ability for lubricant to flow from the oil housing interior 47a into the housing interior 24. However, depending on the application of the drive module assembly 20, it may be desirable to allow a predetermined amount of lubricant to flow between the oil housing 46a and the bottom surface 50 of the housing 22. For example, during a full or partial failure of the pump 48, the lubricant would not be completely trapped in the oil housing interior 47a, which allows some lubricant to exit the oil housing interior 47a to be splashed and thrown by the gear train 40a to provide limited lubrication and cooling to various components of the drive module assembly 20. Additionally, such a configuration of the oil housing 46a allows more efficient manufacturing and allows flexibility on where to place the oil housing 46a in the housing interior 24.

It is to be appreciated that in some embodiments the oil housing 46a may be integral with the housing 22 (i.e., one piece). In such embodiments, lubricant in the oil housing interior 47a is unable to exit the oil housing interior 47a between the oil housing 46a and the bottom surface 50 of the housing 22. In one embodiment, the filter 52 and the oil housing 46a may be a single component.

The drive module assembly 20 may also include a filter 52. The filter 52 may be disposed in the oil housing interior 47a.

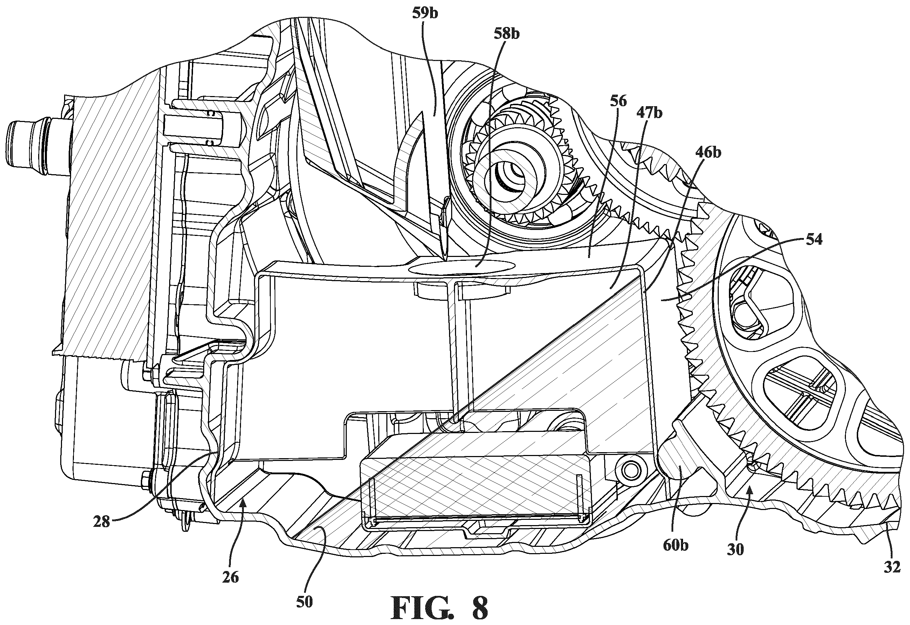

To help replenish lubricant in the oil housing interior 47a due to lubricant exiting the oil housing interior 47a, such as by the pump 48 pulling lubricant from the oil housing interior 47a or lubricant exiting the oil housing interior 47a between the oil housing 46a and the bottom surface 50 of the housing 22, the drive module assembly 20 may include a scavenge pump. Alternatively, or in addition to including a scavenge pump, the oil housing 46a has a vertical wall 54 extending perpendicular with respect to the input axis A partially defining the oil housing interior 47a, and an upper wall 56 extending perpendicular to the vertical wall 54 and further defining the oil housing interior 47a. The vertical wall 54 may be shaped to cooperate with an adjacent gear of the gear train 40a. For example, the vertical wall 54 may be curved to accommodate a gear of the gear train 40a. The upper wall 56 helps further retain the lubricant in the oil housing interior 47a quick movements of the drive module assembly 20. To replenish the lubricant in the oil housing interior 47a, the upper wall 56 defines a collection hole 58a for collecting lubricant to retain lubricant in the oil housing interior 47a. Typically, the collection hole 58a is adjacent the gear train 40a to collect lubricant that drips off of the gear train 40a. However, it is to be appreciated that the collection hole 58a may be located in any suitable location to collect the lubricant. The upper wall 56 is angled with respect to the input axis A such that when lubricant is disposed on the upper wall 56 the lubricant is encouraged to migrate toward and through the collection hole 58a. The drive module assembly 20 may include a collection plate 59a coupled to the housing 22 and disposed adjacent the oil housing 46a. When present, the collection plate 59a helps direct lubricant into and through the collection hole 58a. The collection hole 58a is sized such that, during an intense maneuver, the lubricant in the oil housing interior 47a is held in the oil housing interior 47b by the upper wall 56. As shown in FIG. 8, the lubricant is held in the oil housing interior 47b during an intense maneuver, such as a braking event or turning event. The upper wall 56 prevents the lubricant from exiting the oil housing interior 47b during an intense maneuver.

The drive module assembly 20 may include a retaining projection 60a disposed in the housing interior 24 and adjacent the oil housing 46a. When present, the retaining projection 60a is configured to retain a predetermined amount lubricant adjacent to the oil housing 46a. Specifically, as shown in FIGS. 3 and 7, if any lubricant exits the oil housing interior 47a between the oil housing 46a and the bottom surface 50 of the housing 22, the retaining projection 60a prevents any further egress of the lubricant into the housing interior 24. The lubricant retained by the retaining projection 60a then is able, depending on how tightly the oil housing 46a and bottom surface 50 of the housing 22 are engaged, to flow between the oil housing 46a and the bottom surface 50 of the housing 22 and into the oil housing interior 47a. The desired flow is predetermined by the level of engagement between the retaining projection 60a and the housing 22 and, when present, a seal, such as a moldable rubber bead. The retaining projection 60a may be integral with the housing 22 (i.e., one piece) or the retaining projection 60a may be a separate component from the housing 22 (i.e., two pieces). The retaining projection 60a may have a protruding portion 62 extending toward the oil housing 46a to further retain lubricant between the retaining projection 60a and the oil housing 46a. The protruding portion 62 may cooperate in shape with the oil housing 46a. For example, as shown in FIGS. 3 and 7, the protruding portion 62 has a circular configuration that cooperates with a curved portion 64 of the oil housing 46a.

The power source 36 of the drive module system 38 may be any suitable power source for providing rotational torque to the input shaft 34. For example, the power source 36 may be further defined as internal combustion engine. In another embodiment, as shown in FIG. 2, the power source 36 may be further defined as an electric machine 66.

The drive module assembly 20 may include a second input shaft 78 coupled to the housing 22 and rotatably coupled to the gear train 40a. In such embodiments, the power source 36 may be further defined as a first power source 68 and the input shaft 34 may be further defined as a first input shaft 76. Additionally, in such embodiments, the drive module assembly 20 may include a second power source 70. The first power source 68 is configured to provide rotational torque to the first input shaft 76, and the second power source 70 is configured to provide rotational torque to the second input shaft 78. The first power source 68 may be further defined as a first electric machine 72 and the second power source 70 may be further defined as a second electric machine 74. The first electric machine 72 typically has a first rotor 80 coupled to the first input shaft 76 and a first stator 82 disposed about the first rotor 80. Similarly, the second electric machine 74 typically has a second rotor 84 coupled to the second input shaft 78 and a second stator 86 disposed about the second rotor 84. Both the first and second electric machines 72, 74 may be configured as an electric motor and/or as a generator.

The drive module assembly 20 may include a second gear train 40b, a second output shaft 44b, a second oil housing 46b, a second oil housing interior 47b, a second collection hole 58b, a second collection plate 59b, and a second retaining projection 60b. It is to be appreciated that the description of the gear train 40a, output shaft 44a, oil housing 46a, oil housing interior 47a, collection hole 58a, second collection plate 59a, and retaining projection 60a equally applies to the second gear train 40b, the second output shaft 44b, the second oil housing 46b, the second oil housing interior 47b, the second collection hole 58b, the second collection plate 59b, and the second retaining projection 60b, respectively.

## Claims

1. A drive module assembly (20) comprising:
a housing (22) defining a housing interior (24) for containing a lubricant, wherein said housing interior (24) has a first interior side (26) adjacent a first housing wall (28) of said housing (22) and a second interior side (30) spaced from said first interior side (26) and adjacent a second housing wall (32) of said housing (22);
an input shaft (34) extending along an input axis (A) and coupled to said housing (22) and configured to receive rotational torque from a power source (36);
a gear train (40a) disposed in said housing interior (24) and rotatably coupled to said input shaft (34);
an output shaft (44a) rotatably coupled to said gear train (40a) and configured to provide rotational torque; and
an oil housing (46a) disposed in said housing interior (24) between said first housing wall (28) and said second housing wall (32), wherein said oil housing (46a) defines an oil housing interior (47a) that is configured to retain a portion of the lubricant;
wherein said oil housing (46a) has a vertical wall (54) extending perpendicular with respect to said input axis (A) partially defining said oil housing interior (47a), **characterized in that** said oil housing (46a) has an upper wall (56) extending perpendicular to said vertical wall (54) and further defining said oil housing interior (47a);
wherein said upper wall (56) defines a collection hole (58a) for collecting lubricant to retain lubricant in said oil housing interior (47a); and
wherein said upper wall (56) is angled with respect to said input axis (A) such that when lubricant is disposed on said upper wall (56) the lubricant is encouraged to migrate toward and through said collection hole (58a).

2. The drive module assembly (20) as set forth in claim 1 further comprising a retaining projection (60a) disposed in said housing interior (24) and adjacent said oil housing (46a), wherein said retaining projection (60a) is configured to retain lubricant adjacent to said oil housing (46a).

3. The drive module assembly (20) as set forth in any one of the preceding claims, wherein said housing (22) has a bottom surface (50) extending between said first interior side (26) and said second interior side (30), wherein said oil housing (46a) is engaged with said bottom surface (50), and wherein said bottom surface (50) and said oil housing (46a) define said oil housing interior (47a).

4. The drive module assembly (20) as set forth in any one of the preceding claims, wherein said housing (22) further defines said oil housing interior (47a) with said vertical wall (54) and said upper wall (56).

5. The drive module assembly (20) as set forth in any one of the preceding claims, wherein said oil housing (46a) is removably coupled to said housing (22).

6. The drive module assembly (20) as set forth in any one of claims 1-4, wherein said oil housing (46a) is integral with said housing (22).

7. The drive module assembly (20) as set forth in any one of the preceding claims further comprising a pump (48) configured to circulate lubricant throughout said housing interior (24).

8. The drive module assembly (20) as set forth in any one of the preceding claims further comprising a filter (52) disposed in said oil housing interior (47a).

9. A drive module system (38) comprising said drive module assembly (20) as set forth in any one of the preceding claims, and further comprising a power source (36), wherein said input shaft (34) of said drive module assembly (20) is configured to receive rotational torque from said power source (36).

10. The drive module system (38) as set forth in claim 9, wherein said power source (36) is further defined as an internal combustion engine.

11. The drive module system (38) as set forth in claim 9, wherein said power source (36) is further defined as an electric machine (66).

12. The drive module system as set forth in claim 9, wherein said drive module assembly (20) further comprises a second input shaft (78) coupled to said housing (22) and rotatably coupled to said gear train (40a), wherein said power source (36) is further defined as a first power source (68) and said input shaft (34) is further defined as a first input shaft (76), and further comprising a second power source (70), wherein said first power source (68) is configured to provide rotational torque to said first input shaft (76), and wherein said second power source (70) is configured to provide rotational torque to said second input shaft (78).

13. The drive module system (38) as set forth in claim 12, wherein said first power source (68) is further defined as a first electric machine (72), and wherein said second power source (70) is further defined as a second electric machine (74).

## Patentansprüche

1. Antriebsmodulanordnung (20), umfassend:
ein Gehäuse (22), das ein Gehäuseinneres (24) zur Aufnahme eines Schmiermittels definiert, wobei das Gehäuseinnere (24) eine erste Innenseite (26), die benachbart zu einer ersten Gehäusewand (28) des Gehäuses (22) liegt, und eine zweite Innenseite (30) aufweist, die zu der ersten Innenseite (26) beabstandet ist und benachbart zu einer zweiten Gehäusewand (32) des Gehäuses (22) liegt;
eine Antriebswelle (34), die sich entlang einer Antriebsachse (A) erstreckt, mit dem Gehäuse (22) gekoppelt ist und so ausgebildet ist, dass sie ein Drehmoment von einer Leistungsquelle (36) aufnimmt;
ein Getriebe (40a), das in dem Gehäuseinneren (24) angeordnet und drehbar mit der Antriebswelle (34) gekoppelt ist;
eine Abtriebswelle (44a), die drehbar mit dem Getriebe (40a) gekoppelt und so ausgebildet ist, dass sie ein Drehmoment bereitstellt; und
ein Ölgehäuse (46a), das in dem Gehäuseinneren (24) zwischen der ersten Gehäusewand (28) und der zweiten Gehäusewand (32) angeordnet ist, wobei das Ölgehäuse (46a) ein Ölgehäuseinneres (47a) definiert, das so ausgebildet ist, dass es einen Teil des Schmiermittels zurückhält;
wobei das Ölgehäuse (46a) eine vertikale Wand (54) aufweist, die sich senkrecht zur Antriebsachse (A) erstreckt und das Ölgehäuseinnere (47a) teilweise definiert, **dadurch gekennzeichnet, dass** das Ölgehäuse (46a) eine obere Wand (56) aufweist, die sich senkrecht zur vertikalen Wand (54) erstreckt und das Ölgehäuseinnere (47a) weiter definiert;
wobei die obere Wand (56) eine Sammelöffnung (58a) zum Sammeln von Schmiermittel bildet, um Schmiermittel in dem Ölgehäuseinneren (47a) zurückzuhalten; und
wobei die obere Wand (56) in Bezug auf die Antriebsachse (A) derart abgewinkelt ist, dass, wenn Schmiermittel auf der oberen Wand (56) angeordnet ist, das Schmiermittel dazu angeregt wird, in Richtung der und durch die Sammelöffnung (58a) zu fließen.

2. Antriebsmodulanordnung (20) nach Anspruch 1, ferner umfassend einen Haltevorsprung (60a), der in dem Gehäuseinneren (24) und benachbart zu dem Ölgehäuse (46a) angeordnet ist, wobei der Haltevorsprung (60a) so ausgebildet ist, dass er Schmiermittel benachbart zu dem Ölgehäuse (46a) zurückhält.

3. Antriebsmodulanordnung (20) nach einem der vorhergehenden Ansprüche, wobei das Gehäuse (22) eine Bodenfläche (50) aufweist, die sich zwischen der ersten Innenseite (26) und der zweiten Innenseite (30) erstreckt, wobei das Ölgehäuse (46a) mit der Bodenfläche (50) in Eingriff steht, und wobei die Bodenfläche (50) und das Ölgehäuse (46a) das Ölgehäuseinnere (47a) definieren.

4. Antriebsmodulanordnung (20) nach einem der vorhergehenden Ansprüche, wobei das Gehäuse (22) ferner das Ölgehäuseinnere (47a) mit der vertikalen Wand (54) und der oberen Wand (56) definiert.

5. Antriebsmodulanordnung (20) nach einem der vorhergehenden Ansprüche, wobei das Ölgehäuse (46a) lösbar mit dem Gehäuse (22) gekoppelt ist.

6. Antriebsmodulanordnung (20) nach einem der Ansprüche 1 bis 4, wobei das Ölgehäuse (46a) einstückig mit dem Gehäuse (22) ausgebildet ist.

7. Antriebsmodulanordnung (20) nach einem der vorhergehenden Ansprüche, ferner umfassend eine Pumpe (48), die so ausgebildet ist, dass sie Schmiermittel im gesamten Gehäuseinneren (24) umwälzt.

8. Antriebsmodulanordnung (20) nach einem der vorhergehenden Ansprüche, ferner umfassend einen Filter (52), der im Ölgehäuseinneren (47a) angeordnet ist.

9. Antriebsmodulsystem (38), das die Antriebsmodulanordnung (20) nach einem der vorhergehenden Ansprüche umfasst und ferner eine Leistungsquelle (36) umfasst, wobei die Antriebswelle (34) der Antriebsmodulanordnung (20) so ausgebildet ist, dass sie ein Drehmoment von der Leistungsquelle (36) empfängt.

10. Antriebsmodulsystem (38) nach Anspruch 9, wobei die Leistungsquelle (36) ferner als Verbrennungsmotor definiert ist.

11. Antriebsmodulsystem (38) nach Anspruch 9, wobei die Leistungsquelle (36) ferner als elektrische Maschine (66) definiert ist.

12. Antriebsmodulsystem nach Anspruch 9, wobei die Antriebsmodulanordnung (20) ferner eine zweite Antriebswelle (78) umfasst, die mit dem Gehäuse (22) gekoppelt und drehbar mit dem Getriebe (40a) gekoppelt ist, wobei die Leistungsquelle (36) ferner als erste Leistungsquelle (68) definiert ist und die Antriebswelle (34) ferner als erste Antriebswelle (76) definiert ist, und ferner eine zweite Leistungsquelle (70) umfasst, wobei die erste Leistungsquelle (68) so ausgebildet ist, dass sie der ersten Antriebswelle (76) ein Drehmoment bereitstellt, und wobei die zweite Leistungsquelle (70) so ausgebildet ist, dass sie der zweiten Antriebswelle (78) ein Drehmoment bereitstellt.

13. Antriebsmodulsystem (38) nach Anspruch 12, wobei die erste Leistungsquelle (68) ferner als erste elektrische Maschine (72) definiert ist und wobei die zweite Leistungsquelle (70) ferner als zweite elektrische Maschine (74) definiert ist.

## Revendications

1. Ensemble module d'entraînement (20) comprenant :
un boîtier (22) définissant un intérieur de boîtier (24) destiné à contenir un lubrifiant, dans lequel ledit intérieur de boîtier (24) présente un premier côté intérieur (26) adjacent à une première paroi de boîtier (28) dudit boîtier (22) et un deuxième côté intérieur (30) espacé dudit premier côté intérieur (26) et adjacent à une deuxième paroi de boîtier (32) dudit boîtier (22) ;
un arbre d'entrée (34) s'étendant selon un axe d'entrée (A) et accouplé audit boîtier (22) et conçu pour recevoir un couple de rotation d'une source d'énergie (36) ;
un train d'engrenages (40a) disposé dans ledit intérieur de boîtier (24) et accouplé de manière rotative audit arbre d'entrée (34) ;
un arbre de sortie (44a) accouplé de manière rotative audit train d'engrenages (40a) et conçu pour fournir un couple de rotation ; et
un carter à huile (46a) disposé dans ledit intérieur de boîtier (24) entre ladite première paroi de boîtier (28) et ladite deuxième paroi de boîtier (32), dans lequel ledit carter à huile (46a) définit un intérieur de carter à huile (47a) qui est conçu pour retenir une partie du lubrifiant ;
dans lequel ledit carter à huile (46a) présente une paroi verticale (54) s'étendant perpendiculairement par rapport audit axe d'entrée (A) définissant partiellement ledit intérieur de carter à huile (47a), **caractérisé en ce que** ledit carter à huile (46a) présente une paroi supérieure (56) s'étendant perpendiculairement à ladite paroi verticale (54) et définissant en outre ledit intérieur de carter à huile (47a) ;
dans lequel ladite paroi supérieure (56) définit un trou de collecte (58a) pour collecter du lubrifiant afin de retenir du lubrifiant dans ledit intérieur de carter à huile (47a) ; et
dans lequel ladite paroi supérieure (56) est inclinée par rapport audit axe d'entrée (A) de sorte que lorsque du lubrifiant est disposé sur ladite paroi supérieure (56), le lubrifiant est encouragé à migrer vers et à travers ledit trou de collecte (58a).

2. Ensemble module d'entraînement (20) selon la revendication 1, comprenant en outre une saillie de retenue (60a) disposée dans ledit intérieur de boîtier (24) et adjacente audit carter à huile (46a), dans lequel ladite saillie de retenue (60a) est conçue pour retenir du lubrifiant adjacent audit carter à huile (46a).

3. Ensemble module d'entraînement (20) selon l'une quelconque des revendications précédentes, dans lequel ledit boîtier (22) présente une surface inférieure (50) s'étendant entre ledit premier côté intérieur (26) et ledit deuxième côté intérieur (30), dans lequel ledit carter à huile (46a) est en prise avec ladite surface inférieure (50), et dans lequel ladite surface inférieure (50) et ledit carter à huile (46a) définissent ledit intérieur de carter à huile (47a).

4. Ensemble module d'entraînement (20) selon l'une quelconque des revendications précédentes, dans lequel ledit boîtier (22) définit en outre ledit intérieur de carter à huile (47a) avec ladite paroi verticale (54) et ladite paroi supérieure (56).

5. Ensemble module d'entraînement (20) selon l'une quelconque des revendications précédentes, dans lequel ledit carter à huile (46a) est accouplé de manière amovible audit boîtier (22).

6. Ensemble module d'entraînement (20) selon l'une quelconque des revendications 1 à 4, dans lequel ledit carter à huile (46a) est formé d'un seul tenant avec ledit boîtier (22).

7. Ensemble module d'entraînement (20) selon l'une quelconque des revendications précédentes, comprenant en outre une pompe (48) conçue pour faire circuler du lubrifiant dans tout ledit intérieur de boîtier (24).

8. Ensemble module d'entraînement (20) selon l'une quelconque des revendications précédentes, comprenant en outre un filtre (52) disposé dans ledit intérieur de carter à huile (47a).

9. Système de module d'entraînement (38) comprenant ledit ensemble module d'entraînement (20) selon l'une quelconque des revendications précédentes, et comprenant en outre une source d'énergie (36), dans lequel ledit arbre d'entrée (34) dudit ensemble module d'entraînement (20) est conçu pour recevoir un couple de rotation de ladite source d'énergie (36).

10. Système de module d'entraînement (38) selon la revendication 9, dans lequel ladite source d'énergie (36) est en outre définie comme un moteur à combustion interne.

11. Système de module d'entraînement (38) selon la revendication 9, dans lequel ladite source d'énergie (36) est en outre définie comme une machine électrique (66).

12. Système de module d'entraînement selon la revendication 9, dans lequel ledit ensemble module d'entraînement (20) comprend en outre un second arbre d'entrée (78) accouplé audit boîtier (22) et accouplé de manière rotative audit train d'engrenages (40a), dans lequel ladite source d'énergie (36) est en outre définie comme une première source d'énergie (68) et ledit arbre d'entrée (34) est en outre défini comme un premier arbre d'entrée (76), et comprenant en outre une deuxième source d'énergie (70), dans lequel ladite première source d'énergie (68) est conçue pour fournir un couple de rotation audit premier arbre d'entrée (76), et dans lequel ladite deuxième source d'énergie (70) est conçue pour fournir un couple de rotation audit deuxième arbre d'entrée (78).

13. Système de module d'entraînement (38) selon la revendication 12, dans lequel ladite première source d'énergie (68) est en outre définie comme une première machine électrique (72), et dans lequel ladite deuxième source d'énergie (70) est en outre définie comme une deuxième machine électrique (74).
